# EUROPEAN PATENT SPECIFICATION

(11) **EP 1 336 550 B1**
(45) Date of publication and mention of the grant of the patent: **04.08.2010**
(21) Application number: 03002957.3
(22) Date of filing: 11.02.2003
(51) Int. Cl.: B62D 15/02

(54) **A driving assistance system for a motor vehicle**
Fahrunterstützungs-System für ein Kraftfahrzeug
Système d'assistance à la conduite pour un véhicule à moteur

(30) Priority: 15.02.2002 IT TO20020129
(43) Date of publication of application: 20.08.2003
(73) Proprietor: C.R.F. Società Consortile per Azioni, 10043 Orbassano (Torino) (IT)
(72) Inventor: Antonello, Pier Claudio, 10060 Frossasco (Torino) (IT); Burzio, Gianfranco, 10022 Carmagnola (Torino) (IT); Campo, Sebastiano, 10154 Torino (IT); Chinu, Angela, 10138 Torino (IT); Murdocco, Vincenzo, 10151 Torino (IT); Re Fiorentin, Stefano, 10095 Grugliasco (Torino) (IT)
(74) Representative: Quinterno, Giuseppe

(56) References cited:
- EP-A- 0 806 336

## Description

The present invention relates to a driving assistance system for a motor vehicle of the kind defined in the preamble of claim 1.

A driving assistance system of this kind is disclosed in EP-A-0 806 336.

The object of the present invention is to provide an improved driving assistance system of the above-defined kind.

This object is achieved according to the invention by providing a driving assistance system as defined in claim 1.

Further characteristics and advantages of the invention will become apparent from the detailed description which follows, provided purely by way of non-limitative example, with reference to the appended drawings, in which
Figure 1 is a schematic illustration of a driving assistance system of the invention, and
Figure 2 is a flow chart illustrating the mode of operation of certain functions of the assistance system of the invention

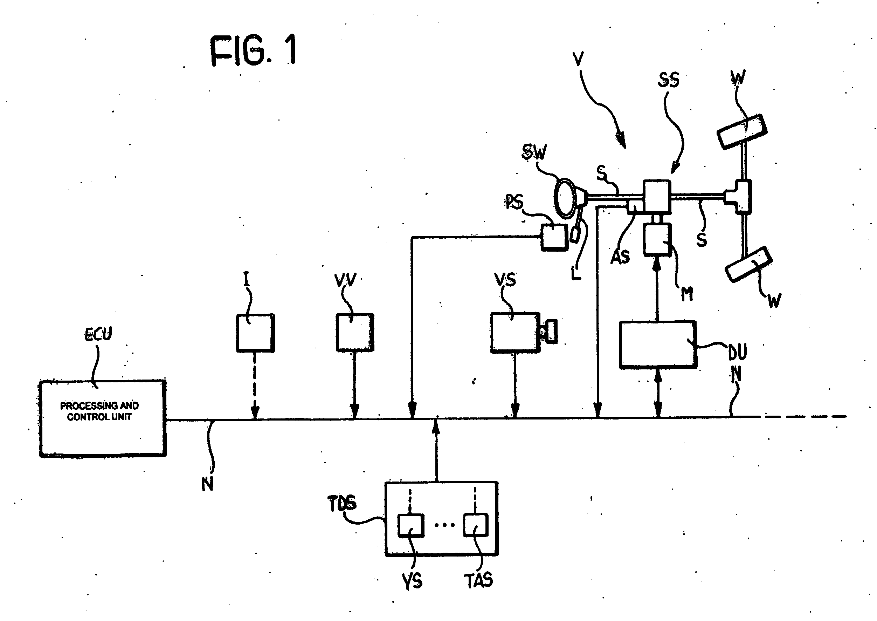

A motor vehicle V, partly illustrated in Figure 1, includes in a manner known per se a pair of steerable wheels W associated with a steering column S which can be controlled by a steering wheel SW.

In a manner which is known per se, an electrically controlled servo-steering assembly SS is associated with the steering column S, including for example an electric operating motor M as well as sensor devices AS operable to supply electrical signals indicating the steering angle and the couple that the driver is applying to the steering column S.

In a manner which is also known per se, the motor vehicle V has direction indicator devices which can be activated selectively, for example by means of a manually operable lever L, so as to warn of a change of direction.

The motor vehicle V is fitted with a driving assistance system of the invention which includes a vision system VS operable to supply electrical signals which can be used to identify the instantaneous position of the vehicle V in relation to detectable lines of demarcation which limit laterally or define a lane in which the vehicle is travelling along a road. In a manner which is known per se, this vision system could include a video-camera directed at the road ahead of the motor vehicle, in association with hardware for processing the image signals generated by the camera.

The driving assistance system also includes a sensor device PS, associated with the control member L for controlling the direction indicators, to provide electric signals indicating whether these indicators are activated or not.

The driving assistance system further includes a sensor VV operable to supply electrical signals indicating the speed at which the vehicle is travelling. This sensor can be shared with other control systems installed in the vehicle.

An electronic processing and control unit, indicated ECU and constituted, for example, by a microprocessor, is connected to the sensor AS associated with the steering column S, to the sensor PS associated with the direction indicator control member, to the vision system VS and to the sensor VV for sensing the speed of the vehicle. The processing and control unit ECU can, for example, be connected to the said sensors by a communication network N installed in the vehicle, such as a network operating under the CAN protocol, for example.

Sensors/transducers of a system for measuring the transverse dynamics of the motor vehicle, generally indicated TDS, are also connected to the processing and control unit ECU by means of the network N. This system includes, for example, a sensor YS operable to supply electrical signals indicating the yaw speed of the vehicle, as well as a sensor TAS operable to provide electrical signals indicating the transverse acceleration thereof.

The unit ECU is also connected to a driving unit DU associated with the motor M of the servo-steering assembly SS.

In the briefest possible terms, the processing and control unit ECU is operable, by means of the driving unit DU, to control the servo-steering assembly SS in such a way as to apply a resistant couple of a predetermined value to the steering column S when the signals emitted by the vision system VS and the sensor PS indicate that the vehicle V is about to leave the lane in which it is travelling and the direction indicators are not activated.

Application of this couple causes transmission of a sensation of resistance to any departure from the correct lane, in terms of a resistant couple on the steering wheel. The resistant couple thus exerted also provides an indication of the steering action which is required in order to return the vehicle within the limits of the intended lane.

The function carried out by the driving assistance system is deactivated on the other hand, although turned on ready for use, if the driver selectively activates an indicator with a view to deliberately changing lane.

The processing and control unit ECU is preferably operable to calculate the radius of curvature of the portion of road on which the vehicle V is travelling. This operation is easily carried out using signals emitted by the vision system VS. On the basis of this information, the unit ECU is able to calculate the resistant couple to be applied to the steering column S according to different methods, in dependence on whether the portion of road along which the vehicle V is travelling is essentially straight or curved.

For convenience, the unit ECU can also be set not only to analyze the signals emitted by the vision system VS but also, in the case of a road with a plurality of contiguous lanes, to recognize in which one the vehicle is travelling. In this case, it is advantageous if the resistant couple which would need to be applied to the steering column S is calculated according to a variety of methods, depending on which lane the vehicle is travelling in (middle lane, left hand lane or right hand lane, for example).

In each of these cases, the resistant couple which would need to be applied to the steering column S is preferably calculated as a function of the instantaneous transverse position of the vehicle V within the lane along which the vehicle is travelling.

When calculating the value of the resistant couple which might need to be applied to the steering column S, it is preferable if account is taken of at least one of a group of parameters which includes the speed of the motor-vehicle, the yaw speed and the transverse acceleration of said motor-vehicle.

It is also preferable if the resistant couple to be applied to the steering column S, is calculated as a function of the value of the couple which the driver is applying to the steering column S.

An additional parameter which the processing unit ECU might take into account when calculating the resistant couple to be applied to the steering column is the camber of the portion of road along which the vehicle is moving. This camber can be worked out on the basis of image signals provided by the vision system VS, or by means of a special inclinometric sensor, such as that indicated I in Figure 1.

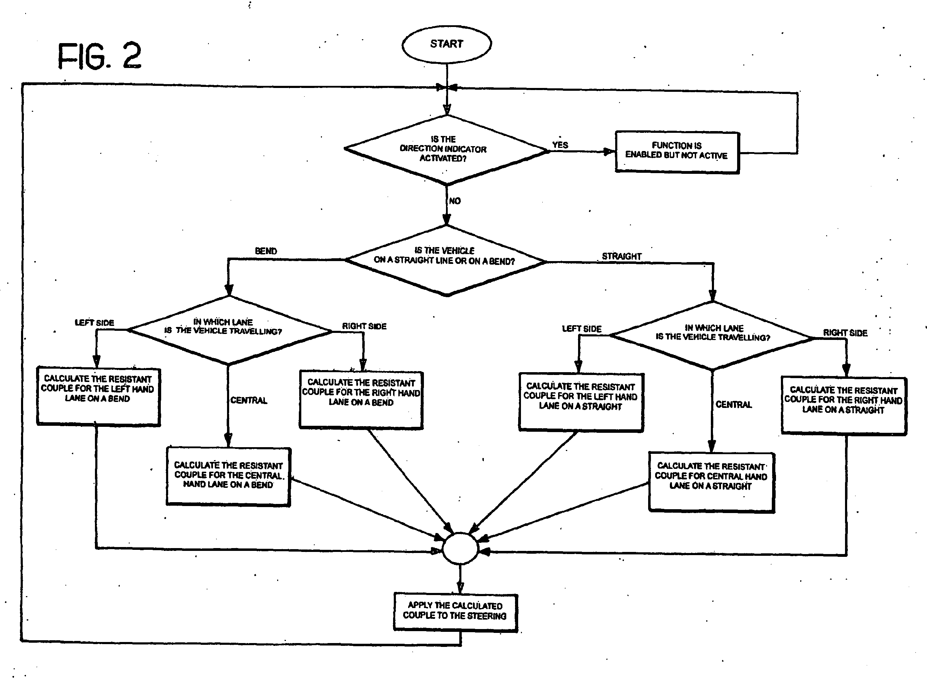

The flow chart of Figure 2 shows, in a manner requiring no further explanation, the logical sequence of the main operations carried out by the driving assistance system outlined above.

It can be seen that, in operation, the driving assistance system first of all checks whether the driver is intending to change lane or, more generally, to move out of the lane in which the vehicle is. It does this by checking whether the direction indicators have been activated or not.

If the driving assistance system calculates that it needs to intervene, it will adopt a different control strategy in dependence on whether the vehicle is moving along a straight stretch of road or a curved one. If the portion of road includes a plurality of driving lanes, the system determines in which one the vehicle is travelling and then works out the couple to be applied to the steering column in accordance with this information.

The resistant couple exerted by the system is calculated in dependence on the other parameters or values mentioned earlier.

## Claims

1. A driving assistance system for a motor vehicle (V) with electrically controlled steering actuator means (SS) and selectively operable direction indicators for warning of a change of direction; the system comprising
detector means (VS) operable to provide electrical signals which can be used to identify the instantaneous position of the motor vehicle (V) relative to detectable demarcation means which mark out or define a lane of a road along which the vehicle is travelling,
sensor means (PS) indicating whether the direction indicators of the vehicle are activated,
electronic processing and control means (ECU) connected to the said detector means (VS) and the said sensor means (PS) and operable to control the said steering actuator means (SS) in such a way as to cause a resistant couple of a predetermined value to be applied to the steering column (S) in the event of signals provided by the said detector means (VS) and sensor means (PS) indicating that the motor vehicle (V) is about to leave the said lane of the road on which it is moving and the direction indicators are found not to be activated;
the system being **characterized in that** the said processing and control means (ECU) are operable to calculate the value of the said resistant couple in dependence on the camber of the portion of road along which the motor vehicle (V) is moving.

2. A system according to Claim 1, in which the said processing and control means (ECU) are operable to calculate the radius of curvature of the stretch of road along which the vehicle (V) is moving and to calculate the resistant couple to be applied to the steering column (S) according to different methods in dependence on whether the stretch of road on which the vehicle (V) is moving is essentially straight or curved.

3. A system according to Claim 2, in which the said processing and control means (ECU) are operable to analyze signals provided by the said detector means (VS) and, in the event of the road on which the vehicle (V) is travelling having a plurality of contiguous lanes, being able to determine in which lane the vehicle is travelling and to calculate a resistant couple of a value which is variable as a function of the lane on which the vehicle (V) is travelling and apply this to the steering column (S).

4. A system according to any preceding Claim, in which the said processing and control means (ECU) are operable to calculate the said resistant couple value in dependence on the transverse position of the motor vehicle (V) within the lane along which it is travelling.

5. A system according to any preceding Claim, which also includes additional detector means (VV; YS; TAS) operable to supply signals indicating at least one parameter of a group of parameters which includes the speed at which the vehicle (V) is moving, the yaw speed and the transverse acceleration of the motor vehicle (V) and in which the said electronic processing and control means (ECU) are operable to calculate the value of the aforesaid resistant couple which might have to be applied to the steering column (S) in dependence on the value of the said at least one parameter.

6. A system according to any preceding Claim, which also includes additional sensor means (AS) operable to supply electrical signals indicating the couple applied by the driver to the steering column (S), and in which the said electronic processing and control means (ECU) are operable to calculate the value of the said resistant couple also in dependence on the value of the couple applied to the steering column by (S) by the driver.

7. A system according to any preceding Claim, in which the said detector means include a vision system (VS) comprising a video camera or the like.

## Patentansprüche

1. Fahrunterstützungssystem für ein Kraftfahrzeug (V) mit einer elektrisch gesteuerten Lenkbetätigungseinrichtung (SS) und wahlweise betätigbaren Richtungsanzeigern für die Vorwarnung eines Richtungswechsels, wobei das System enthält:
eine Detektoreinrichtung (VS), die in Funktion elektrische Signale bereitstellt, die dazu verwendet werden können, die momentane Position des Fahrzeugs (V) im Bezug auf erfassbare Markierungseinrichtungen zu bestimmen, die eine Spur einer Straße markieren oder definieren, entlang derer sich das Fahrzeug bewegt,
eine Sensoreinrichtung (PS), die anzeigt, ob die Richtungsanzeiger des Fahrzeugs aktiviert sind, und
eine elektronische Verarbeitungs- und Steuereinrichtung (ECU), die mit der Detektoreinrichtung (VS) und der Sensoreinrichtung (PS) verbunden ist und in Funktion die Lenkbetätigungseinrichtung (SS) derart steuert, dass eine Widerstandskopplung eines vorbestimmten Wertes auf die Lenksäule (S) für den Fall angewendet wird, dass Signale, die von der Detektoreinrichtung (VS) und der Sensoreinrichtung (PS) zugeführt werden, anzeigen, dass das Kraftfahrzeug (V) im Begriff ist, die Spur der Straße zu verlassen, in der es sich bewegt, und festgestellt wird, dass die Richtungsanzeiger nicht aktiviert sind;
wobei das System **dadurch gekennzeichnet ist, dass** die Verarbeitungs- und Steuereinrichtung (ECU) in Funktion den Wert der Widerstandskopplung in Abhängigkeit der Wölbung des Abschnittes der Straße berechnet, auf der sich das Kraftfahrzeug (V) bewegt.

2. System nach Anspruch 1, bei dem die Verarbeitungs- uns Steuereinrichtung (ECU) in Funktion den Kurvenradius der Strecke der Straße berechnet, entlang derer sich das Fahrzeug (V) bewegt, und die Widerstandskopplung, die auf die Lenksäule (S) anzuwenden ist, gemäß unterschiedlichen Verfahren in Abhängigkeit davon berechnet, ob die Strecke der Straße, auf der sich das Fahrzeug (V) bewegt, im wesentlichen gerade oder kurvig verläuft.

3. System nach Anspruch 2, bei dem die Verarbeitungs- und Steuereinrichtung (ECU) in Funktion Signale analysiert, die von der Detektoreinrichtung (VS) zugeführt werden, und für den Fall, dass die Straße, auf dem sich das Fahrzeug (V) bewegt, mehrere zusammenhängende Spuren hat, in der Lage ist zu ermitteln, auf welcher Spur sich das Fahrzeug bewegt, eine Widerstandskopplung eines Wertes zu berechnen, der eine Variable als eine Funktion der Spur ist, in der sich das Fahrzeug (V) bewegt, und diese auf die Lenksäule (S) anzuwenden.

4. System nach einem der vorhergehenden Ansprüche, bei dem die Verarbeitungs- und Steuereinrichtung (ECU) in Funktion den Widerstandskopplungswert in Abhängigkeit der Querposition des Kraftfahrzeugs (V) innerhalb der Spur berechnet, in der es sich bewegt.

5. System nach einem der vorhergehenden Ansprüche, das zudem zusätzliche Detektoreinrichtungen (VV; YS; TAS) enthält, die in Funktion Signale zuführen, die wenigstens einen Parameter einer Gruppe von Parametern kennzeichnen, die die Geschwindigkeit, mit der sich das Fahrzeug (V) bewegt, die Giergeschwindigkeit und die Querbeschleunigung des Kraftfahrzeugs (V) enthält, und bei dem die elektronische Verarbeitungs- und Steuereinrichtung (ECU) in Funktion den Wert der zuvor erwähnten Widerstandskopplung, die gegebenenfalls auf die Lenksäule (S) anzuwenden ist, in Abhängigkeit des Wertes des wenigstens einen Parameters berechnet.

6. System nach einem der vorhergehenden Ansprüche, das zudem eine zusätzliche Sensoreinrichtung (AS) enthält, die in Funktion elektrische Signale zuführt, die die Kopplung kennzeichnen, die von einem Fahrer auf die Lenksäule (S) ausgeübt wird, und bei der die elektronische Verarbeitungs- und Steuereinrichtung (ECU) in Funktion den Wert der Widerstandskopplung zudem in Abhängigkeit des Wertes der Kopplung berechnet, die auf die Lenksäule (S) durch den Fahrer ausgeübt wird.

7. System nach einem der vorhergehenden Ansprüche, bei dem die Detektoreinrichtungen ein Sichtsystem (VS) beinhalten, das eine Videokamera oder dergleichen enthält.

## Revendications

1. Système d'assistance à la conduite pour un véhicule à moteur (V) avec un moyen d'actionnement de la direction commandé électriquement (SS) et des indicateurs de direction pouvant être actionnés de manière sélective pour avertir d'un changement de direction ; le système comprenant
un moyen détecteur (VS) pouvant être actionné pour fournir des signaux électriques pouvant être utilisés pour identifier la position instantanée du véhicule à moteur (V) par rapport à un moyen de démarcation détectable qui délimite ou définit une voie sur une route parcourue par le véhicule,
un moyen capteur (PS) indiquant si les indicateurs de direction du véhicule sont activés,
des moyens de traitement et de commande électroniques (ECU) connectés audit moyen détecteur (VS) et audit moyen capteur (PS) et pouvant être actionnés pour commander ledit moyen d'actionnement de la direction (SS) de façon à appliquer un couple résistant d'une valeur prédéterminée à la colonne de direction (S) dans le cas où les signaux fournis par lesdits moyen détecteur (VS) et moyen capteur (PS) indiquent que le véhicule à moteur (V) est sur le point de quitter ladite voie sur la route qu'il parcourt et si l'on s'aperçoit que les indicateurs de direction ne sont pas activés ;
le système étant **caractérisé en ce que** lesdits moyens de traitement et de commande (ECU) peuvent être actionnés pour calculer la valeur dudit couple résistant en fonction de la cambrure de la partie de route parcourue par le véhicule à moteur (V).

2. Système selon la revendication 1, dans lequel lesdits moyens de traitement et de commande (ECU) peuvent être actionnés pour calculer le rayon de courbure du tronçon de route parcouru par le véhicule (V) et pour calculer le couple résistant à appliquer à la colonne de direction (S) conformément à différents procédés selon que le tronçon de route parcouru par le véhicule (V) est essentiellement rectiligne ou incurvé.

3. Système selon la revendication 2, dans lequel lesdits moyens de traitement et de commande (ECU) peuvent être actionnés pour analyser les signaux fournis par ledit moyen détecteur (VS) et, dans le cas où la route parcourue par le véhicule (V) comporte une pluralité de voies contiguës, sont capables de déterminer sur quelle voie le véhicule se déplace et de calculer un couple résistant d'une valeur variable en fonction de la voie sur laquelle le véhicule (V) se déplace et d'appliquer celui-ci à la colonne de direction (S).

4. Système selon l'une quelconque des revendications précédentes, dans lequel lesdits moyens de traitement et de commande (ECU) peuvent être actionnés pour calculer ladite valeur de couple résistant en fonction de la position transversale du véhicule à moteur (V) sur la voie sur laquelle il se déplace.

5. Système selon l'une quelconque des revendications précédentes, incluant également un moyen détecteur supplémentaire (W; YS; TAS) pouvant être actionné pour délivrer des signaux indiquant au moins un paramètre d'un groupe de paramètres incluant la vitesse à laquelle le véhicule (V) se déplace, la vitesse de lacet et l'accélération transversale du véhicule à moteur (V) et dans lequel lesdits moyens de traitement et de commande électroniques (ECU) peuvent être actionnés pour calculer la valeur du couple résistant susmentionnée devant être appliqué à la colonne de direction (S) en fonction de la valeur dudit au moins un paramètre.

6. Système selon l'une quelconque des revendications précédentes, incluant également un moyen capteur supplémentaire (AS) pouvant être actionné pour délivrer des signaux électriques indiquant le couple appliqué par le conducteur à la colonne de direction (S), et dans lequel lesdits moyens de traitement et de commande électroniques (ECU) peuvent être actionnés pour calculer la valeur dudit couple résistant en fonction également de la valeur du couple appliqué à la colonne de direction (S) par le conducteur.

7. Système selon l'une quelconque des revendications précédentes, dans lequel ledit moyen détecteur comporte un système de visualisation (VS) comprenant une caméra vidéo ou analogue.
